# EUROPEAN PATENT APPLICATION

(11) **EP 1 298 677 A2**
(43) Date of publication of application: **02.04.2003**
(21) Application number: 02004243.8
(22) Date of filing: 26.02.2002
(51) Int. Cl.: G21F 9/00

(54) **A method of decontaminating by ozone and a device therefor**

(30) Priority: 27.09.2001 JP 2001295916
(71) Applicant: Hitachi, Ltd., Chiyoda-ku, Tokyo 101-8010 (JP); Hitachi Engineering Co., Ltd., Hitachi-shi, Ibaraki 317-0073 (JP)
(72) Inventor: Nagase, Makoto, Mito-shi, Ibaraki 310-0836 (JP); Hosokawa, Hideyuki, Hitachi-shi, Ibaraki 317-0076 (JP); Anazawa, Kazumi, Hitachi-shi, Ibaraki 319-1416 (JP); Aizawa, Motohiro, Hitachi-shi, Ibaraki 317-0077 (JP); Chiba, Yoshinori, Naka-gun, Ibaraki 319-1100 (JP)
(74) Representative: Beetz & Partner Patentanwälte

(57) **Abstract**

The present invention provides a simple and inexpensive decontaminating method without producing any secondary waste due to decontamination. A method comprising steps of evaporating liquid ozone, feeding the gaseous ozone into a re-circulation line 2 in the upstream side of the re-circulation pump 3 to make ozone-rich water, circulating the ozone-rich water in the reactor-water re-circulation system, and remove radioactive materials from metallic surfaces.

## Description

### Background of the Invention:

### <Field of the Invention>

This invention relates to a nuclear power related facility, particularly a decontaminating method for chemically removing radionuclides from metal surfaces contaminated with radionuclides.

### <Prior Art>

There have been various decontaminating methods using chemical means such as decontaminating agents such as inorganic acids, organic acids, and so on. For example, Patent Gazette No. Hei 03-10919 discloses a method for chemically decontaminating metallic components in a reactor by using permanganic acid as an oxidizing agent and dicarboxylic acid as a reducing agent. Japanese Application Patent Laid-Open Publication No. 2000-81498 discloses a method for chemically decontaminating metallic components by using ozone and oxalic acid. Japanese Application Patent Laid-Open Publication No. Sho 60-39592 and Japanese Translations of Publication for Patent Applications No. Sho 61-501338 respectively use cerium Ce and ozone, and cerium Ce, chromic acid, and ozone.

To remove radionuclides from surfaces of units and parts which are contaminated with radionuclides in a nuclear power related facility, particularly from surfaces of units having oxide films formed in hot water in the primary system of a boiling water reactor, the chemical decontaminating methods disclosed in Patent Gazette No. Hei 03-10919 and Japanese Application Patent Laid-Open Publication No. 2000-81498 are not so effective because these methods require a large-scale decontaminating device which increases the construction cost and take at least three days for decontamination although their decontaminating effects are great. In a critical process, this may prolong a periodic inspection time. Further, these methods must remove chemical materials used for decontamination. Consequently, secondary wastes increase to be disposed of.

This is also true to the decontaminating methods disclosed by Japanese Application Patent Laid-Open Publication No. Sho 60-39592 and Japanese Translations of Publication for Patent Applications No. Sho 61-501338 as these inventions use chemical materials such as cerium Ce and chromic acid for decontamination.

### Summary of the Invention:

An object of the present invention is to suppress production of the secondary waste in decontamination of metal surfaces which are contaminated with radioactive materials.

The surfaces of metals in contact with the reactor water in the primary system of the boiling water reactor have two deposit layers: an inner oxide film layer produced by corrosion of the base material and an outer oxide layer of deposit from the reactor water.

The outer layer contains a cladding of primary iron oxides and its radioactivity is less than one third of the whole radioactivity. The outer layer cladding does not closely cover the whole oxide film but is so porous that the reactor water may penetrate into the outer layer and touch the inner oxide film.

The inner oxide film layer mainly comprises chromic oxides and contains a lot of radioactive materials. Therefore, it is possible to remove most of radioactive materials from the system by dissolving and removing the inner chromic oxide film. After profound researches and experiments, we inventors found that ozone water can dissolve chromic oxides without producing secondary wastes. Ozone oxidizes trivalent chrome into hexavalent chrome by its strong oxidizing force and the resulting chromic ions are soluble in water. Surplus ozone is easily decomposed into oxygen. Therefore, no other secondary chemical wastes are produced.

However, as the solubility of ozone into water is not so high, a high-purity ozone gas must be used to prepare ozone water whose ozone concentration is high enough to accomplish the optimum oxidizing performance. To prepare such a high-purity ozone gas, we used an ozonizer which has steps of electrically discharging in an oxygen gas to produce ozone in the oxygen gas, cooling this ozone-oxygen mixture gas between -112°C (the boiling point of ozone) and -182°C (the boiling point of oxygen), and collecting liquid ozone only. The obtained ozone is almost pure. We can get 90 % or higher ozone gas by evaporating this liquid ozone.

We blew this high-purity ozone gas into the reactor water which flows through the reactor water re-circulation system via the vent line or the drain line. With this, we could supply high-concentration ozone water into the reactor water re-circulation system, dissolve and remove chromic oxides from surfaces of pipes and units in the reactor re-circulation system. After confirming that no ozone is detected in the reactor water containing radionuclides such as cobalt, we can remove the radionuclides in the reactor water clean up system. Therefore, a temporary device in this method is only a device that supplies a high-purity ozone gas. This is very simple and does not require so much money.

As the ozone gas to be blown into the reactor water is purer, the concentration of ozone in the ozone water becomes higher and the ozone water has stronger oxidizing force. The concentration of ozone in the ozone gas is preferably 90 %. It must be at least 30 % or higher, practically 50 % or higher.

### Brief Description of the Drawings:

Fig. 1 is a schematic diagram of a decontaminating system which is a first embodiment of the present invention;
Fig. 2 is a summary of decontaminating processes in accordance with the present invention;
Fig. 3 is a conceptual drawing indicating the result of decontamination in accordance with the present invention;
Fig. 4 is a schematic diagram of an example of a high-purity ozone gas generating unit of Fig. 1;
Fig. 5 is a schematic diagram of an example of a liquid ozone producing device;

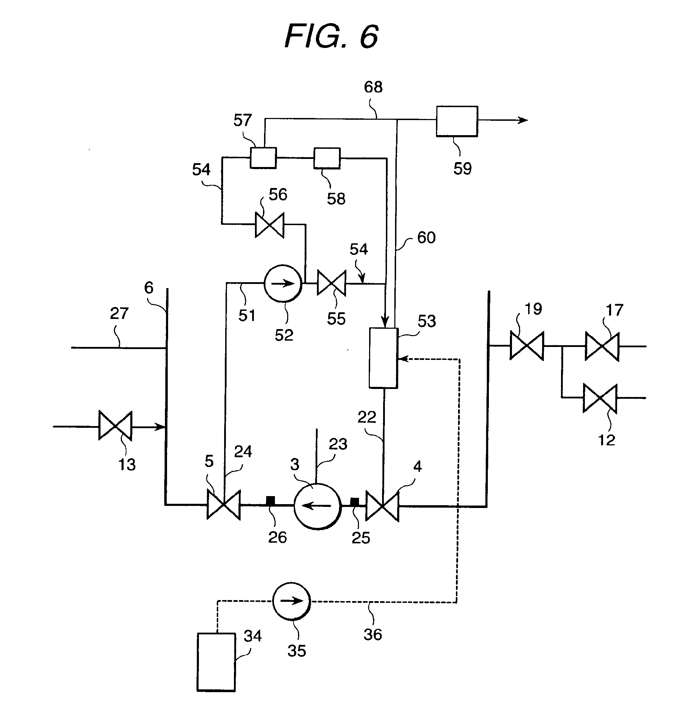

Fig. 6 is a schematic diagram of a decontaminating system which is a third embodiment of the present invention; and
Fig. 7 is a schematic diagram of a decontaminating system which is a fourth embodiment of the present invention.

### Description of the Invention:

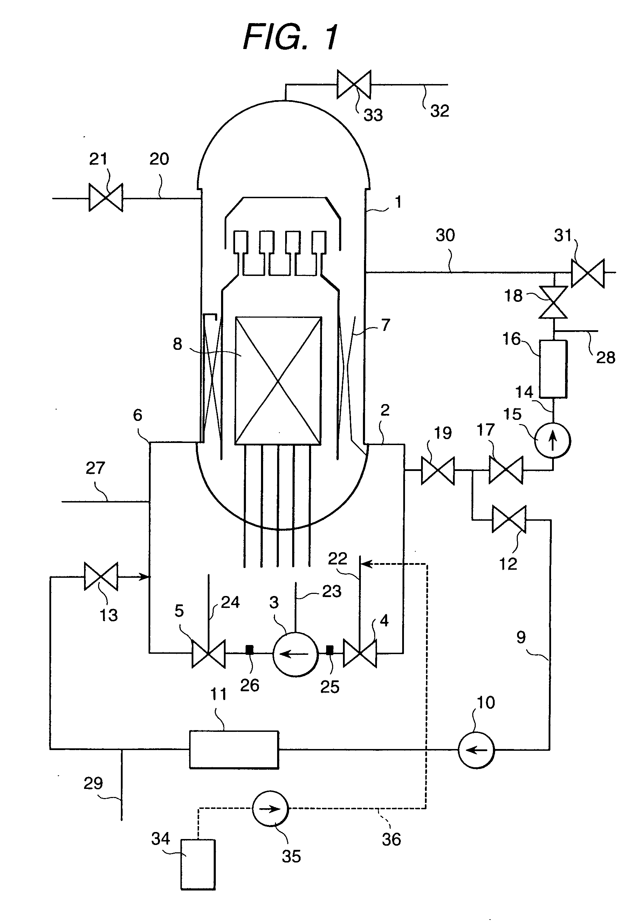

Below will be explained a first embodiment of the present invention, referring to fig. 1. This embodiment applies a device in accordance with the present invention to decontaminate the inner surfaces of units and pipes in the reactor water re-circulation system of a boiling water type nuclear power plant. Fig. 1 is a decontaminating system example comprising a reactor pressure vessel, a reactor water re-circulation system, a reactor water clean up system, a residual heat removal system, and a device or supplying an ozone gas (which is prepared by evaporation of liquid ozone) to these systems.

This embodiment provides an ozone decontaminating device which comprises an ozone gas supplying unit 34, an ozone gas supplying line 36 having one end connected to the ozone gas supplying unit 34 and the other end connected to a vent line 22 of the inlet valve 4 of the re-circulation system, and an ozone gas supply pump 35 which is placed in the ozone gas supplying line 36 and feeds the ozone gas from ozone gas supplying unit 34 to the reactor water re-circulation system. The ozone gas supplying line 36 can be a stainless steel sheet tube, a polytetrafluorethylene tube and so on.

The reactor pressure vessel 1 is connected to a main steam line 20 having a main steam isolating valve 21 in it, a water supply line having a valve 31 in it, and a vent line 32 having a valve 33 in it.

The reactor water re-circulation system comprises a re-circulation line 2 which is connected to the reactor pressure vessel 1 and contains a re-circulation pump inlet valve 4, a re-circulation pump 3, and a re-circulation pump outlet valve 5 in the order of upstream to downstream. A pipe connecting the outlet of the re-circulation pump outlet valve 5 to the reactor pressure vessel 1 is called a riser pipe 6. The re-circulation pump inlet valve 4 and the re-circulation pump outlet valve 5 respectively have vent lines 22 and 24 in their bonnets. The re-circulation pump 3 also has a bent line 23. The re-circulation lines 2 before and after the re-circulation pump 3 respectively have decontamination seats 25 and 26.

The residual heat removal system comprises a residual heat removal system line 9 which has the upstream end connected to the re-circulation line 2 before the re-circulation pump inlet valve 4 and the downstream end connected to the re-circulation line 2 after the re-circulation pump outlet valve 5 and contains a valve 19, a valve 12, a residual heat removal system pump 10, a heat exchange 11, and a valve 13 in the order of upstream to downstream. The residual heat removal system line 9 between the heat exchange 11 and the valve 13 has a sampling line 29. A re-circulation system sampling line 27 is provided close to the reactor pressure vessel 1 than the joint of the lower end of the residual heat removal system line 9.

The reactor water cleaning system comprises a reactor water cleaning system line 14 which has the upstream end connected to the residual heat removal system line 9 between said valves 19 and 12 and contains a valve 17, a reactor water clean up system pump 15, a demineralizer 16, and a valve 18 in the order of upstream to downstream. A reactor cleaning sampling line 28 is provided in the reactor water clean up system line 14 between the demineralizer 16 and the valve 18.

When the nuclear power plant stops power generation, the flow of the reactor water after parallel off is classified into three. The first flow is the reactor pressure vessel 1, the reactor water re-circulation system 2, re-circulation pump, the riser pipe 6, the reactor pressure vessel 1, the jet pump 7, the bottom of the pressure vessel, and the reactor core 8 in this order. The second flow is the reactor water re-circulation system 2, branched to the valves 19 and 17, the reactor water clean up system pump 15, the demineralizer 16, the valve 18, the water supply line 30, and back to the reactor pressure vessel 1 in this order. The third flow is the reactor water re-circulation system 2, branched to the valves 19 and 12, the residual heat removal system pump 10, the heat exchange 11, the valve 13, and the reactor water re-circulation system 2 in that order. These flows remove the decay heat that was generated in the reactor core 1 and clean the reactor water to keep the high-quality reactor water.

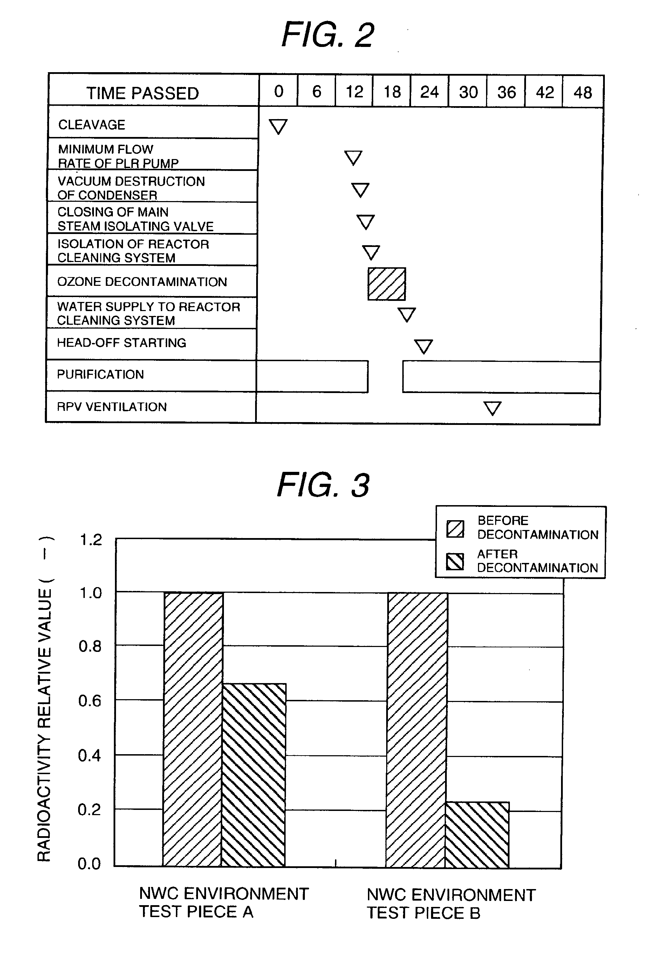

Fig. 2 shows the outline of processes of decontaminating the reactor water re-circulation line 2, the re-circulation pump 3, the re-circulation pump inlet valve 4, the re-circulation pump outlet valve 5, and the riser pipe 6. The "high-purity ozone gas in the later description refers to a gas obtained by evaporating liquid ozone. Fig. 2 shows how major events are implemented as the time goes by. After a parallel off, the residual heat removal system cools the reactor water down to 100°C (after 12 hours). In this step, the flow rate of the re-circulation pump becomes minimum. The residual heat removal system still keeps on cooling. When the reactor water is cooled below 80°C, the vacuum of the condenser is broken.

In ozone decontamination, ozone may evaporate from the reactor water and move to the gas phase in the upper part of the reactor pressure vessel 1. The main steam isolating valve 21 is closed prior to start of decontamination to prevent the evaporated ozone from dispersing into the turbine system. When the ozone water enters the demineralizer 16 in the reactor water cleaning system, the ion exchange resin in the demineralizer 16 may be oxidixed and decomposed and consequently the total amount of organic carbons (TOC) in the reactor water may increase. To prevent this or to isolate the reactor water clean up system from the reactor re-circulation system, the reactor water clean up system pump 15 is stopped prior to start of decontamination and the valves 17 and 18 are closed prior to start of decontamination.

When the system is ready for decontamination, the ozone gas supplying unit 34 feeds high-purity ozone into the reactor water re-circulation system through the ozone gas supply line 36 by mean of the ozone gas supplying pump 35. Fig. 2 shows an example of connecting the ozone gas supplying line 36 to the vent line 22 of the re-circulation pump inlet valve 4 to feed the gas. The advantage of this connection is the use of the existing pipe (which leads to less modification of the system) and the expansion of the decontamination range because the vent line 22 is comparatively in the upstream side of the re-circulation line. However, we cannot expect that this connection (using the vent line 22 to feed the ozone gas) has an effect to decontaminate the re-circulation line between the reactor pressure vessel 1 and the re-circulation pump inlet valve 4. This is because the injected ozone will decompose and the ozone passing through the reactor core in which water is decomposed by strong gamma rays (lasting even after the reactor stops) may also be decomposed.

Next will be explained the quantity of ozone to be added into the reactor water. For example, the minimum flow rate (20 %) of the re-circulation pump 3 is 2000 m³/hour (in case of a 1100 Mwe nuclear power plant). To let ozone be contained by 20 ppm (concentration) in this reactor water, ozone must be fed at a rate of about 40 kg/hour. The time required for decontamination of 3 hours to 12 hours, preferably 5 hours to 6 hours.

To determine a time required for decontamination, we inventors took the steps of preparing a test piece A which was contaminated with radioactive cobalt 58 under a water chemistry (NWC) which is the same quality of water, temperature condition, and addition of no hydrogen as those of the actual nuclear power plant and a test piece B which was contaminated with radioactive cobalt 58 under a hydrogen water chemistry (HWC) which is the same quality of water, temperature condition, and addition of hydrogen as those of the actual nuclear power plant, dipping these test pieces A and B in ozone-saturated water (saturated by jetting ozone gas into water) at an ordinary temperature, and measured the radioactivities of the test pieces A an B after dipping of 5 hours and 10 hours. As the result of measurement after 5-hour dipping, we found that the test piece A (contaminated under the NWC condition) lost about 1/3 of the original radioactivity and the test piece B (contaminated under the HWC condition) lost about 3/4 of the original radioactivity.

Judging from the above, the time for decontamination can be 3 hours to 12 hours, preferably 5 hours to 6 hours. Although it seems a longer decontamination period increases the effect of decontamination, the actual result after the 10-hour test was almost equal to that after 5-hour test. Therefore, the time for decontamination can be at most 12 hours for assurance. A longer decontamination time is not preferable because it may affect the critical process.

It is technically possible to make the purity of ozone for supply 90 % or higher and it is the most preferable to use that high purity ozone. However, the purity of ozone goes down by its decomposition depending upon the temperature and length of the ozone supplying line. Judging from a typical ozonizer produces ozone of purity of 10 % to 20 %, the purity of ozone in the method of preparing ozone from liquid ozone must be 30 % or higher to be characteristic. Practically, the preferable purity of ozone should be 50 % or higher so that the partial pressure of ozone in the gas may be dominant.

It seems that a higher ozone concentration may shorten the time of decontamination, but the solubility of ozone in water is not so high, or at most 20 ppm even when a high-purity ozone gas is used. It is of no use to feed more ozone to increase the ozone concentration. Excessive ozone will cause cavitations in the re-circulation pump 3. Therefore, the minimum acceptable time for decontamination may be 3 hours. However, it takes about 5 hours for the residual heat removal system to cool the system. Therefore the time for decontamination need not be shorter than 5 hours.

Besides the vent line 22 connected to the re-circulation pump inlet valve 4, we can also use, to feed the ozone gas, the vent lines 23 and 24 connected to the re-circulation pump 3 and the re-circulation pump outlet valve 5, the re-circulation system sampling line 7, the sampling line 28 connected to the outlet of the demineralizer 16 in the reactor water clean up system, the sampling line 29 in the residual heat removal system, and the decontamination seats 25 and 26 before and after the re-circulation pump. Among these, the vent line 23 connected to the re-circulation pump 3 is not preferable because the pump 3 may possibly cause cavitations. Further, any single ozone supply point after the re-circulation pump 3 is not preferable because the re-circulation pump inlet valve 4 and the re-circulation pump 3 cannot be decontaminated. However, when they are used together with the vent line 22, the rate of ozone fed to the inlet (of the vent line 22) can be reduced and consequently cavitations in the pump can be reduced. Further, the use of both a point after (in the downstream of) the re-circulation pump 3 and the vent line 22 can increase the concentration of ozone in the riser pipe 6 as the quantity of ozone which decomposes itself reduces assuming that the total quantity of ozone to be added is identical.

As the sampling line 29 in the residual heat removal system is usually outside the reactor vessel, it is easy to feed the ozone gas into the sampling line 29, but the rang of decontamination becomes smaller because the ozone feed point (at which the ozone-rich water is fed to the re-circulation system) is after (in the downstream of) the re-circulation pump. Contrarily, when the sampling Lin 28 connected to the outlet of the demineralizer in the reactor water clean up system is used to feed ozone, the ozone-rich water flows into the reactor pressure vessel 1 through the water supply pipe 30 and part of the water returns to the re-circulation line 2. This flow can decontaminate the upstream side of the re-circulation pump inlet valve 4. However, demerits of this connection is that it takes a lot of time between injection of ozone and reach to the parts to be decontaminated and that most of ozone is carried to the reactor core 1 by the jet pump 7 and uselessly decomposed by radioactive rays.

Ozone supply is stopped after a preset time period of ozone supply. As explained above, ozone is decomposed by itself and by radioactive rays in the reactor core 8 and disappears from the system. However, it is recommended to make sure that the reactor water contains no ozone before removing radioactive materials from the reactor water in the reactor water clean up system because any ozone left in the reactor water will oxidize and decompose the ion exchange resin in the demineralizer 16 when passing through the demineralizer 16. After making sure that the reactor water contains no ozone, the operator opens the valves 17 and 18 and start the reactor cleaning pump 15 to clean the system.

If ozone decomposition is slow and insufficient, catalyst of noble metal or active carbon must be added from the inlet of the demineralizer 16 in the reactor water clean up system to accelerate decomposition of ozone. This ozone decomposition before the rector water reaches the ion exchange resin protects the ion exchange resin against decomposition and enables us to go to the next cleaning process.

These simple steps can remove part of radioactive materials from inner surfaces of units and pipes in the reactor re-circulation system and thus reduce the atmospheric dose rate in the reactor vessel. When applied to remove decontaminants from the reactor water, the device in the reactor water clean up system in accordance with the present invention can remotely collect and dispose of the eluted radioactive materials. This can reduce the exposure to radioactivity during decontamination and temporary facilities, which leads to the reduction in decontamination cost.

Before the head (upper lid) of the reactor pressure vessel 1 is opened, the upper gas phase in the reactor pressure vessel 1 may contain some ozone gas. Therefore, we can use the valve 33 in the vent line on the normal head to perform gas substitution if the gas contains gaseous radionuclides such as iodine. As a normal gas processing system is equipped with an active carbon filter to adsorb iodine, any left-over ozone can be removed by the active carbon and affects nothing on the environment.

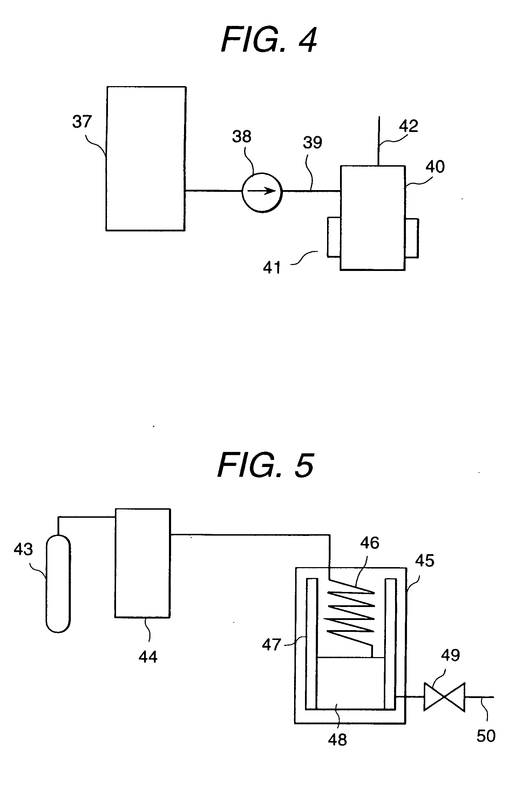

As shown in Fig. 4, the high-purity ozone generating unit 34 can comprise a liquid ozone container 37 for storing and transporting liquid ozone, a gasifying unit 40 connected to this liquid ozone container with a liquid ozone transfer line 39, and a liquid ozone pump 38 which is provided in the liquid ozone transfer line 39 to transfer liquid ozone. The gasifying unit 40 should be equipped with a temperature control unit 41 to control the rate of gas generation. It is also possible to use the solid ozone container as a transportation unit, liquefy solid ozone, send liquid ozone to the gasifying unit, and evaporate liquid ozone there.

As illustrated in Fig. 5, high-purity liquid ozone can be produced by the steps of transferring the oxygen gas from an oxygen container 43 to a normal discharge-type ozone generating unit 44, partially turning oxygen into ozone, transferring a ozone-oxygen mixture gas into an ozone condensing pipe 46 whose temperature is kept between -112°C and -182°C by a temperature control unit 47 and a refrigerator, and turning gaseous ozone into liquid ozone.

Liquid ozone is stored in a liquid ozone tank 48 which is chilled in the same manner and can be drawn out from the liquid ozone pickup line 50 when the valve 49 is opened. The oxygen gas which is left uncondensed is discharged to the atmosphere through an oxygen discharge line 67. To remove a trace of ozone in the oxygen gas to be discharged by decomposition, the ozone as decomposing column 59 is filled with active carbon. The active carbon can be substituted by catalyst of noble metal to prevent the filler in the column from being burnt by a large amount of ozone in the gas.

It is also possible to feed the oxygen gas back to the upstream side of the discharge-type ozone generating unit 44 instead of discharging the oxygen gas to the atmosphere. This has a merit of omitting the ozone decomposing column 59 and reducing the quantity of oxygen gas to be required. Further, the oxygen container 43 can be a device of extracting oxygen from the air. Similarly, the refrigerator can be substituted by liquid nitrogen to cool the ozone condensing pipe 46 and the liquid ozone tank 48. Liquid ozone can be turned into solid ozone when cooled below its boiling point (-182°C). For transportation, solid ozone is much safer than liquid ozone because liquid ozone may explode by a quick temperature change.

It is possible to use an ozone generating device on-site to prepare ozone for decontamination. However, an ozone generating device to produce ozone at a great rate (such as 40 kg/hour) is very big and requires a large installation space. In some cases, it is impossible to keep such a large installation space in the reactor vessel near ozone supply points. It is also possible to place the ozone generating device outside the reactor vessel, but the concentration of ozone may go down as ozone decomposes in the long ozone supply line. Therefore, it is rational to prepare liquid ozone or solid ozone as a high-purity ozone material outside the reactor vessel, transfer the liquid or solid ozone into the reactor vessel, and evaporate it into gaseous ozone in the reactor vessel. In this case, we can take enough time to produce ozone and reduce the construction cost of the ozone generating device and the ozone production cost (by using nighttime power services).

As already explained, it is difficult to reduce the level of the remaining radioactivity down to 2/3 to 1/4 of the original radioactivity solely by decontamination by ozone. When disassembling and checking the re-circulation pump 3 and its inlet and outlet valves 4 and 5, it is preferable to first decontaminate such parts by ozone and then process them chemically for complete decontamination. Substantially, we can wash the parts at least once with aqueous solution of about 2000 ppm of an organic acid which mainly contains oxalic acid at 90°C. If this washing is insufficient for decontamination, we can take steps of decomposing the oxalic decontaminating agent by a catalyst or ultraviolet rays in the presence of hydrogen peroxide, processing it with ozone or oxidizing decontaminating agent containing permanganic ions (for oxidization decontamination), and processing it again with oxalic decontaminating agent (for reduction decontamination). These oxidization and reduction decontaminations can be repeated until the desired effect of decontamination is obtained.

The decontamination by ozone while the reactor is not running can get a high decontamination effect equivalent to that after oxidization decontamination of ozone-treated parts by organic acid. Therefore, this embodiment can shorten the succeeding oxidization and reduction decontaminations after decontamination by ozone and reduce the dose of radiation exposure of the operators who set up the temporary equipment.

In accordance with the above embodiment, the present invention can reduce not only the dose rate in the reactor water re-circulation system by a simple device and in a short time but also the radiation exposure on maintenance engineers and operators. Further, the present invention by-produces almost no secondary waste resulting from decontamination because ozone for oxidization decontamination is easily decomposed into oxygen.

Next, a second embodiment of the present invention will be explained below. Said first embodiment uses a ozone decontamination process while the reactor is not in service. However, the re-circulation pump 3 is running during decontamination and consequently a large quantity of reactor water flows through the reactor water re-circulation system. Therefore, it is possible to perform decontamination while the re-circulation pump 3 is running with its inertia after the re-circulation pump 3 is turned off. In this case, the total quantity of ozone to be used can be reduced by controlling the rate of the gas to be added according to the flow rate. This method can suppress the generation of cavitations in the re-circulation pump 3.

However, in this case, the upper lid of the reactor pressure vessel 1 is to be opened after the re-circulation pump 3 stops. (This is called "headoff.") When the lid is opened, the ozone gas may flow over the operation floor (on which the upper opening of the reactor pressure vessel 1 is located). To prevent this, the head-off operation should be suppressed for a time period of decontamination, during inspection to make sure that there is no ozone in the reactor water, during ventilation of the gas phase in the upper art of the reactor pressure vessel 1, and until the eluted radioactive materials are cleaned and removed.

A third embodiment of the present invention will be explained below. Said first and second embodiments are characterized by using the driving force or inertia of the re-circulation pump 3 to flow ozone water and the demineralizer 16 in the reactor water clean up system to remove the eluted radioactive materials. These devices 3 and 16 are plant components and their use is limited. To solve this problem, the third embodiment comprises
a temporary circulation line 51 which connects the vent line 24 of the re-circulation pump outlet valve 5 and the vent line 22 of the re-circulation pump inlet valve 4 and contains a temporary circulation pump 52, a valve 56, an ozone decomposition column 57, an ion exchange resin column 58, and an ozone dissolving tank 53,
a bypath line 54 which connects the temporary circulation line 51 between the temporary circulation pump 52 and the valve 56 to the temporary circulation line 51 between the ion exchange resin column 58 and the ozone dissolving tank 53,
an ozone gas decomposition column 59 which is connected to the ozone decomposition column 57 with a vent line 68,
a vent line 60 which connects the ozone dissolving tank 53 and the vent line 68,
an ozone gas supplying unit 34,
an ozone gas supplying line 36 which connects the ozone gas supplying unit 34 and the ozone dissolving tank 53, and
an ozone gas supplying pump 35 which is provided in the ozone gas supplying line 36 to feed the ozone gas to the ozone dissolving tank 53.

This system configuration enables decontamination of the re-circulation pump inlet valve 4, the re-circulation pump 3, the re-circulation pump outlet valve 5, and the re-circulation line 2 independently of the other processes.

The temporary circulation line 51 is connected to a bypath line 54 and the flow through the temporary circulation line 51 can be changed by valves 55 and 56. To accelerate elution of radioactive materials with ozone of high concentration, open the valve 55, close the valve 56 and run the temporary circulation pump 52 to circulate the reactor water while feeding ozone from the high-purity ozone gas supplying unit 34 into the ozone dissolving tank 53. The vent line 60 of the ozone dissolving tank 53 exhausts an excessive gas which was decomposed in the ozone gas decomposing column. After the elution of radioactive materials seems to be sufficient, the valve 56 is opened and the valve 55 is closed. With this, the ion remaining in the reactor water is decomposed by the ozone decomposing column 37 and the radioactive materials dissolved in the reactor water are removed by the ion exchange resin column 58. The decomposed gas in the ozone decomposing column 57 is sent to the ozone decomposing column 59 through the vent line 68.

The advantage of using this temporary system is that the decontamination process is isolated from the maintenance process and that the range to be decontaminated is limited and the quantity of required ozone can be reduced. Contrarily, the demerit of this method is that it requires many temporary devices and as the result this increase the construction cost. Further, another demerit is that the effect of decontamination is much limited as only the area between the outlet and inlet valves of the re-circulation pump is decontaminated.

The range of decontamination can be widened by connecting the temporary circulation line 51 to the re-circulation system sampling line 27 instead of the vent line 24 of the outlet valve 5 of the re-circulation pump. However, this has demerits that the sampling line exists in only one of two reactor water re-circulation systems, that, when the re-circulation water merges with water from the residual heat removal system, part of the mixture returns to the reactor pressure vessel 1, and that any remaining ozone may flow over the operation floor.

This problem can be solved by closing the end of the pipe at the joint between the reactor pressure vessel 1 an the re-circulation line 2 with a plug to isolate the whole re-circulation line 2 including the riser pipe from the reactor pressure vessel 1, and connecting the re-circulation line 2 to the temporary re-circulation line 51 by a connecting means of the plug. However, the upper cover of the reactor pressure vessel 1 must be opened to close the re-circulation line 2 with a plug and this delays the decontamination process relative to the start of the maintenance (parallel off) and the temporary circulation line connected to the plug must be made longer. Consequently, ozone will decompose itself more.

The embodiments 2 and 3 can reduce the dose of rate of the reactor water re-circulation system and the radiation exposure on service engineers and operators by simple devices without affecting the critical process in periodic maintenance of a nuclear power plant. Further, these embodiment use ozone to oxidize and decontaminate radioactive materials. Ozone is easily decomposed and produces almost no secondary waste after decontamination.

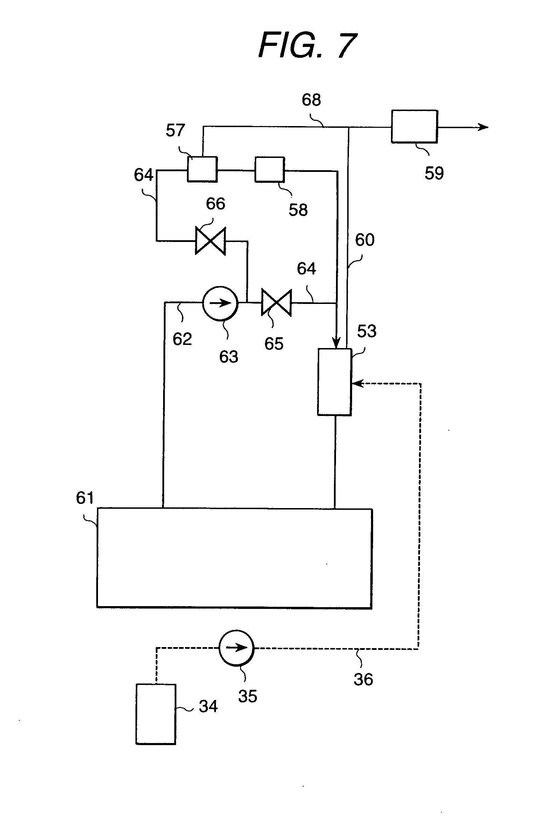

Next will be explained a fourth embodiment of the present invention. As explained above, the decontaminating methods of Embodiments 1 to 3 are a kind of system decontamination method which decontaminates units and pipes in the reactor water re-circulation system as they are. Contrarily, Embodiment 4 referring to Fig. 7 decontaminates small parts whose radioactivities can be reduced by oxidization decontamination.

Referring to Fig. 7, the decontaminating device which is the fourth embodiment of the present invention comprises
a decontamination tank 61,
a circulation line 62 which has both upstream and downstream ends connected to opposite ports of the decontamination tank 61 and contains a circulation pump 63, a valve 66, an ozone decomposing column 57, an ion exchange resin column 58, an ozone dissolving tank 53 in the order from upstream to downstream,
a bypath line 64 which connects one part of the circulation line 62 between the circulation pump 63 and the valve 66 to the another part of the circulation line 62 between the ion exchange resin column 58 and the ozone dissolving tank 53,
an ozone gas decomposing column 59 which is connected to the ozone dissolving tank 53 with a vent line 68,
a vent line 60 which connects the ozone dissolving tank 53 and the vent line 68,
an ozone gas supplying unit 34,
an ozone gas supplying line 36 which connects the ozone gas supplying unit 34 and the ozone dissolving tank 53, and
an ozone gas supplying pump 35 which is provided in the ozone gas supplying line 36 an feeds the ozone gas into the ozone dissolving tank 53.

For decontamination, the device of Embodiment 4 takes the steps of filling the decontamination tank 61 with water as a fluid for decontamination, putting the contaminated units and parts in the decontamination tank 61, opening the valve 65 and closing the valve 66 to accelerate elution of radioactivities with high-concentrated ozone, running the circulation pump 63 in the circulation line 6 to flow water to and from the decontamination tank 61 through the circulation line 62, and feeding ozone from the ozone gas supplying unit 34 to the ozone dissolving tank 53 to make ozone-rich water. The excessive gas decomposed in the ozone gas decomposing column 59 is exhausted through the vent line 60 of the ozone dissolving tank 53.

The ozone-rich water prepared in the ozone dissolving tank 53 oxidizes and elutes radioactive materials deposited on the surfaces of contaminated units and parts in the decontamination tank 61 while the ozone-rich water allows through the decontamination tank 61. When the radioactive materials are fully eluted, the valve 66 is opened and the valve 65 is closed to circulate the water to and from the decontamination tank 61 through the ozone decomposing column 57 and the ion exchange column 58. The ozone decomposing column 57 decomposes ozone in the water and the ion exchange resin column 58 removes the eluted radioactive materials. The gas decomposed in the ozone gas decomposing column 57 is sent to the ozone gas decomposing column 59 through the vent line 68 and exhausted to the atmosphere from the column 59.

In accordance with this embodiment, the radioactive materials deposited on the contaminated units and parts are oxidized by ozone to be soluble to water, caught and removed by the ion exchange resin column 58. Ozone remaining in the water is decomposed by the ozone decomposing column 57. Therefore, only the radioactive materials caught and removed by the ion exchange resin column 58 is the radioactive waste and there generates no other secondary waste. In other words, the quantity of radioactive waste will never increase.

The present invention can suppress generation of additional secondary waste due to decontamination.

## Claims

1. A method of removing radionuclides from surfaces of metal which is contaminated therewith, comprising steps of evaporating an ozone liquid into an ozone gas, blowing the ozone gas into water to dissolve, letting the ozone-rich water contact with the surfaces of the contaminated metal, and thus removing deposits containing said radionuclides.

2. A method of removing radionuclides from surfaces of metal which is contaminated therewith in accordance with Claim 1, wherein the purity of the ozone gas evaporated from said ozone liquid is equal or more than 30

3. A method of removing radionuclides from surfaces of metal which is contaminated therewith in accordance with Claim 1 or 2, wherein said metal contaminated with radionuclides contains materials constituting units and pipes in a reactor water re-circulation system of a boiling water reactor type nuclear power plant and said ozone water washes away deposits containing said radionuclides from surfaces of said metal while flowing through said units and pipes.

4. A method of removing radionuclides from surfaces of metal which is contaminated therewith in accordance with Claim 3, wherein said ozone gas is blown into at least one selected from a set of vent lines (22, 24) at inlet and outlet valves of the re-circulation pump, a sampling line (27) in the re-circulation system, a sampling line (28) in the reactor cleaning line, and a sampling line (29) in the residual heat removal system to dissolve into the water flowing through the system and to produce ozone-rich water.

5. A method of removing radionuclides from surfaces of metal which is contaminated therewith in accordance with Claim 3, wherein a temporary circulation (51) line is provided to connect the reactor water re-circulation pipes before and after the re-circulation pump (3) to circulate reactor water through this temporary circulation line (51) and the re-circulation pump (3) and the ozone gas is blown into anywhere in said re-circulation line (51) to dissolve into the reactor water and produce ozone water.

6. A method of removing radionuclides from surfaces of metal which is contaminated therewith in accordance with Claim 4, wherein the ozone gas is blown to dissolve into the reactor water of 80°C or lower with the main steam isolating valve closed.

7. A method of removing radionuclides from surfaces of metal which is contaminated therewith in accordance with Claim 4 or 6, wherein the reactor water clean up system is isolated from the re-circulation system before injection of the ozone gas starts.

8. A method of removing radionuclides from surfaces of metal which is contaminated therewith in accordance with Claim 5, further comprising steps of providing a pipe containing an ion exchange resin column (58) and a pipe containing no ion exchange resin column in parallel in said temporary circulation line, capturing and removing radioactive materials from the ozone-treated reactor water by said ion exchange resin.

9. A method of removing radionuclides from surfaces of metal which is contaminated therewith in accordance with any of Claims 3, 4, 6 and 7, further comprising a step of removing the dissolved radionuclides in the reactor water clean up system after decontamination by the ozone gas.

10. A method of removing radionuclides from surfaces of metal which is contaminated therewith in accordance with any of Claims 3 through 9, further comprising a step of reduction-decontaminating part or whole of units and pipes that are decontaminated by ozone at least once with a reduction-decontaminating agent mainly comprising oxalic acid.

11. A method of removing radionuclides from surfaces of metal which is contaminated therewith in accordance with Claim 9, further comprising a step of supplying noble metals that can decompose residual ozone and hydrogen peroxide into the reactor water clean up system through the inlet of the demineralizer of the reactor water clean up system before removing the dissolved radionuclides with the reactor water clean up system.

12. An ozone decontaminating device for removing radionuclides from surfaces of metal which is contaminated therewith, comprising a means for producing a high-purity ozone gas from liquid ozone and an ozone gas supply line (36) which is connected to said ozone gas producing means to lead the ozone gas to an ozone destination.

13. An ozone decontaminating device for removing radionuclides from surfaces of metal which is contaminated therewith, comprising
a decontamination tank (61) to receive materials to be decontaminated,
a circulation line (62) which is connected to said tank (61) to circulate water in said tank,
a circulation pump (63) provided in said circulation line,
an ozone decomposition column (57) and an ion exchange resin column (59), and
a means for injecting the ozone gas into said circulating water,
wherein said ozone gas injecting means is connected to said ozone producing means for producing a high-purity ozone gas from liquid ozone and contains
a means for producing a high-purity ozone gas from liquid ozone and an ozone gas supply line (36) which is connected to said ozone gas producing means to lead the ozone gas to an ozone destination.

14. An ozone decontaminating device in accordance with Claim 12 or 13, wherein said ozone gas supplying line contains a pump.
